# EUROPÄISCHE PATENTSCHRIFT

(11) **EP 1 708 540 B1**
(45) Veröffentlichungstag und Bekanntmachung des Hinweises auf die Patenterteilung: **04.07.2012**
(21) Anmeldenummer: 06004577.0
(22) Anmeldetag: 07.03.2006
(51) Int. Cl.: H04Q 9/00

(54) **Verfahren zur Temperaturmessung bei einem Haushaltsgerät**
Method for measuring the temperature in a domestic appliance
Procédé pour la mesure de température dans un appareil ménager

(30) Priorität: 31.03.2005 DE 102005015028
(43) Veröffentlichungstag der Anmeldung: 04.10.2006
(73) Patentinhaber: Miele & Cie. KG, 33332 Gütersloh (DE)
(72) Erfinder: Beier, Dominic, 33332 Gütersloh (DE); Meierfrankenfeld, Wenzel, 33334 Gütersloh (DE)

(56) Entgegenhaltungen:
- DE-A1- 19 723 127
- US-A- 4 475 024
- US-A1- 2003 164 713
- BUFF W ET AL: "Universal pressure and temperature SAW sensor for wireless applications", ULTRASONICS SYMPOSIUM, 1997. PROCEEDINGS., 1997 IEEE TORONTO, ONT., CANADA 5-8 OCT. 1997, NEW YORK, NY, USA,IEEE, US, Bd. 1, 5. Oktober 1997 (1997-10-05), Seiten 359-362, XP010271311, DOI: DOI:10.1109/ULTSYM.1997.663039 ISBN: 978-0-7803-4153-1

## Beschreibung

Die Erfindung betrifft ein Verfahren zur Temperaturmessung bei einem Haushaltsgerät.

Ein derartiges Verfahren ist beispielsweise aus der DE 29 35 282 C2 bekannt. Bei dem bekannten Verfahren wird eine hochfrequente elektromagnetische Erregerwelle mittels einer Verarbeitungseinheit des Haushaltsgeräts erzeugt. Die vorher festgelegte Sendefrequenz ist aus einem Frequenzband, in dem die temperaturabhängigen Resonanzfrequenzen eines in einer Temperaturmesssonde integrierten LC-Resonanzkreises enthalten sind, die den bei dem Betrieb des Haushaltsgeräts an der Temperaturmesssonde zu erwartendenden Temperaturen entsprechen. Während einer ersten Phase wird die Erregerwelle drahtlos auf den LC-Resonanzkreis der Temperaturmesssonde übertragen. Als Folge davon wird in dem LC-Resonanzkreis eine elektromagnetische Antwortwelle erzeugt, die während einer an die erste Phase unmittelbar anschließenden zweiten Phase drahtlos an die Verarbeitungseinheit rückübertragen wird. Der vorgenannte Verfahrensablauf wiederholt sich fortlaufend, wobei die Sendefrequenz in festgelegten Frequenzschritten erhöht wird, bis das Frequenzband durchlaufen ist. Die von der Verarbeitungseinheit empfangenen Antwortwellen werden in Antwortsignale umgewandelt und in einer Auswerteschaltung der Verarbeitungseinheit wird mittels eines Impulszählers die temperaturabhängige Resonanzfrequenz und damit die Temperatur an der Temperaturmesssonde ermittelt. Ein Nachteil der bekannten Anordnung ist, dass LC-Resonanzkreise in der Regel nicht für den Einsatz bei hohen Temperaturen, beispielsweise im Bereich um etwa 250°C, geeignet sind.

Aus der US_4,475,024 ist ein Mikrowellenofen bekannt, welcher eine Temperaturmesssonde aufweist, die eingerichtet ist, die Kerntemperatur eines im Mikrowellenofen eingebrachten Nahrungsmittels zu messen. Dabei umfasst die Temperaturmesssonde einen Resonanzkreislauf, wobei die Resonanzfrequenz abhängig von der Innentemperatur des Nahrungsmittels variiert.

Die US 2003/0164713 A1 offenbart ein Erzeugnis. wie beispielsweise einAutomobilreifen, das einen, keine eigenständige Stromversorgung benötigenden Sensor umfasst, durch welchen eine einem reaktiven Widerstand entsprechende Meßgröße, wie Verschleiß, Druck und Temperatur innerhalb eines Meßbereichs lieferbar ist, einem Anpassnetzwerk und einem Oberflächenwellenelement, wobei der Sensor über das Anpassnetzwerk an einen ersten Reflektor des Oberflächenwellenelements geschaltet ist und der erste Reflektor mit dem Anpassnetzwerk und dem Sensor einen Resonator bildet Zusätzlich wird verwiesen auf den Aufsatz "Universal pressure and temperature SAW sensor for wireless applications" Ultrasonics Symposium, 1997 Proceedings., 1997 IEEE Toronto, Ont., Canada 5-8 Oct. 1997 New York, NY, USA, IEEE, US, Bd. 1, 5. Oktober 1997 (1997-10-05), Seiten 359-362, ISBN: 978-0-7803-4153-1.

Der Erfindung stellt sich somit das Problem ein Verfahren zur Temperaturmessung bei einem Haushaltsgerät anzugeben, das schaltungstechnisch weniger aufwendid und weniger störungsanfällig ist und auch für den Einsatz bei höheren Temperaturen geeignet ist.

Erfindungsgemäβ wird dieses Problem durch ein Verfahren mit den Merkmalen des Patentanspruchs 1 gelöst. Vorteilhafte Ausgestaltungen und Weiterbildungen der Erfingung ergeben sich aus den nachfolgenden Unteransprüchen.

Die mit der Erfindung erreichbaren Vorteile bestehen neben einer weniger aufwendigen Schaltungstechnik und einer geringeren Störungsanfälligkeit insbesondere in den geringeren Herstellkosten.

Zwar ist es beispielsweise aus der DE 197 23 127 A1 bekannt, Oberflächenwellenbauelemente zu Temperaturmesszwecken bei Kochfeldern einzusetzen. Das Auswerteverfahren sieht hier jedoch vor, mittels der Phasenverschiebung zwischen den Impulsmustern der Antwortsignale auf die Temperatur an der Temperaturmesssonde zu schließen. Gleiches gilt für den Gegenstand der DE 198 28 170 A1. Alternativ hierzu wird in der DE 44 13 211 A1 vorgeschlagen, die Antwortsignale mittels Fourier-Transformation auszuwerten.

Eine zweckmäßige Weiterbildung der erfindungsgemäßen Lehre sieht vor, dass die aktuelle Temperatur zur Regelung des Garprozesses verwendet und/oder auf einer Anzeigeeinrichtung des Haushaltsgeräts angezeigt wird.

Eine vorteilhafte Weiterbildung sieht vor, dass die Sendefrequenz aus dem Frequenzband von etwa 433 MHz bis etwa 434 MHz gewählt wird und sich die in dem Frequenzband direkt benachbarten Sendefrequenzen um etwa 5 kHz oder weniger voneinander unterscheiden. Dieses Frequenzband ist in mehreren Staaten ohne Einschränkungen nutzbar. Ein weiteres vorteilhaftes Frequenzband wäre von etwa 868 MHz bis etwa 869 MHz, da hier die Antenne für das Senden der Erregerwelle und das Empfangen der Antwortwelle kleiner und damit platzsparender ausgebildet sein kann.

Eine weitere vorteilhafte Weiterbildung sieht vor, dass das hochfrequente Antwortsignal vor der Verarbeitung in der Auswerteschaltung in der Verarbeitungseinheit in ein niederfrequentes Antwortsignal umgewandelt wird. Hierdurch ist die weitere Verarbeitung vereinfacht. Einfachere und damit kostengünstigere elektrische Schaltungen sind dadurch ermöglicht.

Eine andere vorteilhafte Weiterbildung sieht vor, dass das Antwortsignal vor der Verarbeitung in der Auswerteschaltung in der Verarbeitungseinheit gleichgerichtet wird. Hierdurch ist die weitere Verarbeitung weiter vereinfacht.

Eine besonders vorteilhafte Weiterbildung sieht vor, dass die gleiche Sendefrequenz mehrfach unmittelbar nacheinander verwendet wird und aus den einzelnen Signalpegeln zu einer Sendefrequenz ein mittlerer Signalpegel gebildet, abgespeichert und für den Vergleich verwendet wird. Auf diese Weise ist die Genauigkeit der Temperaturmessung verbessert.

Eine vorteilhafte Weiterbildung sieht vor, dass die von mindestens zwei Oberflächenwellenbauelementen im gleichen Frequenzband erzeugten Signalpegel in der Auswerteschaltung ausgewertet werden. Hierdurch ist der schaltungstechnische Aufwand bei der Verwendung von mindestens zwei Oberflächenbauelementen reduziert.

Eine andere vorteilhafte Ausführungsform sieht vor, dass der Speicher jeweils nur den bis zur aktuellen Messung größten Signalpegel sowie die zugeordnete Sendefrequenz enthält. Auf diese Weise ist der erforderliche Speicherplatz verringert.

Eine besonders vorteilhafte Weiterbildung der erfindungsgemäßen Lehre sieht vor, dass zeitlich vor den übrigen Verfahrensschritten in einem ersten Verfahrensschritt mittels einer weiteren mit der Verarbeitungseinheit in Signalübertragungsverbindung stehenden Temperaturmesssonde mit einem Temperatursensor, der eine im Wesentlichen über dessen Lebensdauer konstante Korrelation zwischen Eingangs- und Ausgangsgröße aufweist, in der Auswerteschaltung eine Nachkalibrierung der dem Oberflächenwellenbauelement oder den einzelnen Oberflächenwellenbauelementen zugeordneten temperaturabhängigen Resonanzfrequenzen erfolgt. Hierdurch ist die Genauigkeit der Temperaturmessung weiter verbessert.

Eine weitere vorteilhafte Weiterbildung sieht vor, dass für die Temperaturmessung mit mindestens zwei Oberflächenwellenbauelementen zumindest zwei voneinander verschiedene Frequenzbänder verwendet werden, wobei den mindestens zwei Oberflächenbauelementen jeweils ein Frequenzband zugeordnet ist. Auf diese Weise ist eine eindeutige Zuordnung eines Antwortsignals zu einem Oberflächenwellenbauelement ermöglicht.

Ein Ausführungsbeispiel der Erfindung ist in den Zeichnungen rein schematisch dargestellt und wird nachfolgend näher beschrieben. Es zeigt
- Figur 1: ein Haushaltsgerät, bei dem ein erfindungsgemäßes Verfahren eingesetzt wird, in einer Frontansicht,
- Figur 2: die Temperaturmesssonde aus Fig. 1 in einer geschnittenen Seitenansicht,
- Figur 3: ein Blockschaltbild der Verarbeitungseinheit und der Temperaturmesssonde,
- Figur 4: eine Amplituden-Zeit-Darstellung des Erreger- und des Antwortsignals bei einer Sendefrequenz fern der Resonanzfrequenz des Oberflächenwellenbauelements,
- Figur 5: eine Amplituden-Zeit-Darstellung des Erreger- und des Antwortsignals bei einer Sendefrequenz nahe der Resonanzfrequenz des Oberflächenwellenbauelements und
- Figur 6: den Signalpegel in Abhängigkeit der Sendefrequenz.

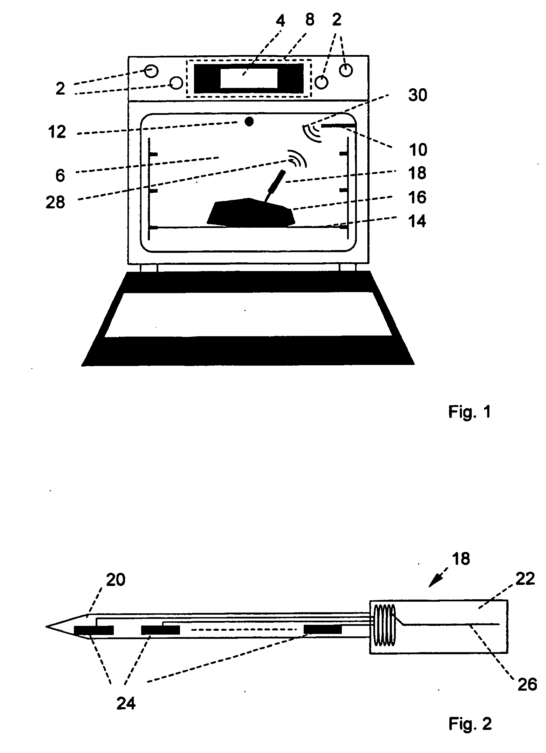

In Fig. 1 ist ein als Backofen ausgebildetes Haushaltsgerät dargestellt, bei dem das erfindungsgemäße Verfahren verwendet wird. Der Backofen weist Bedienelemente 2 und eine Anzeigeeinrichtung 4, eine Backmuffel 6 und eine durch eine gestrichelte Linie symbolisierte elektrische Verarbeitungseinheit 8 auf. Die Bedienelemente 2 und die Anzeigeeinrichtung 4 sind auf dem Fachmann bekannte Weise mit der elektrischen Verarbeitungseinheit 8 signalübertragend verbunden. Gleiches gilt für eine in der Backmuffel 6 angeordnete Garraumantenne 10 und eine ebenfalls in der Backmuffel 6 angeordnete weitere Temperaturmesssonde 12. Die weitere Temperaturmesssonde 12 weist hier einen als PT 1000 ausgebildeten Temperatursensor auf. Grundsätzlich sind jedoch auch andere Ausführungsformen des Temperatursensors denkbar, die eine im Wesentlichen über deren Lebensdauer konstante Korrelation zwischen Eingangs- und Ausgangsgröße aufweisen. Ferner ist es denkbar, dass nicht nur eine weitere Temperaturmesssonde 12 sondern eine Mehrzahl von weiteren Temperaturmesssonden 12 verwendet werden, was nachfolgend noch näher erläutert wird.

In die Backmuffel 6 ist ein auf einem Gargutträger 14 aufgelegtes als Fleischstück ausgebildetes Gargut 16 eingeschoben, in das eine als Garspieß ausgebildete Temperaturmesssonde 18 eingestochen ist. Der Aufbau der Temperaturmesssonde 18 ist anhand von Fig. 2 näher erläutert. Grundsätzlich sind die Temperaturmesssonden 12 und 18 nach Art, Material, Dimension und Anordnung in weiten geeigneten Grenzen wählbar.

Fig. 2 zeigt die Temperaturmesssonde 18 im Detail. Die Temperaturmesssonde 18 weist einen Spieß 20 und ein Griffstück 22 auf, wobei in dem Spieß 20 mehrere als Oberflächenwellenbauelemente 24 ausgebildete Temperatursensoren angeordnet sind. Die Oberflächenwellenbauelemente 24 sind derart ausgewählt, dass die temperaturabhängigen Resonanzfrequenzen, die den bei dem Betrieb des Haushaltsgeräts an der Temperaturmesssonde 18 zu erwartenden Temperaturen entsprechen, in dem für das vorliegende Ausführungsbeispiel ausgewählten Frequenzband von etwa 433 MHz bis etwa 434 MHz enthalten sind. Die einzelnen Oberflächenwellenbauelemente 24 sind auf dem Fachmann bekannte Weise mit einer im Griffstück 22 angeordneten Antenne 26 elektrisch leitend verbunden. Um die Antenne 26 möglichst platzsparend auszubilden, ist diese teilweise als Verlängerungsspule ausgebildet. Diese Ausbildung der Antenne 26 ist jedoch nicht zwingend erforderlich.

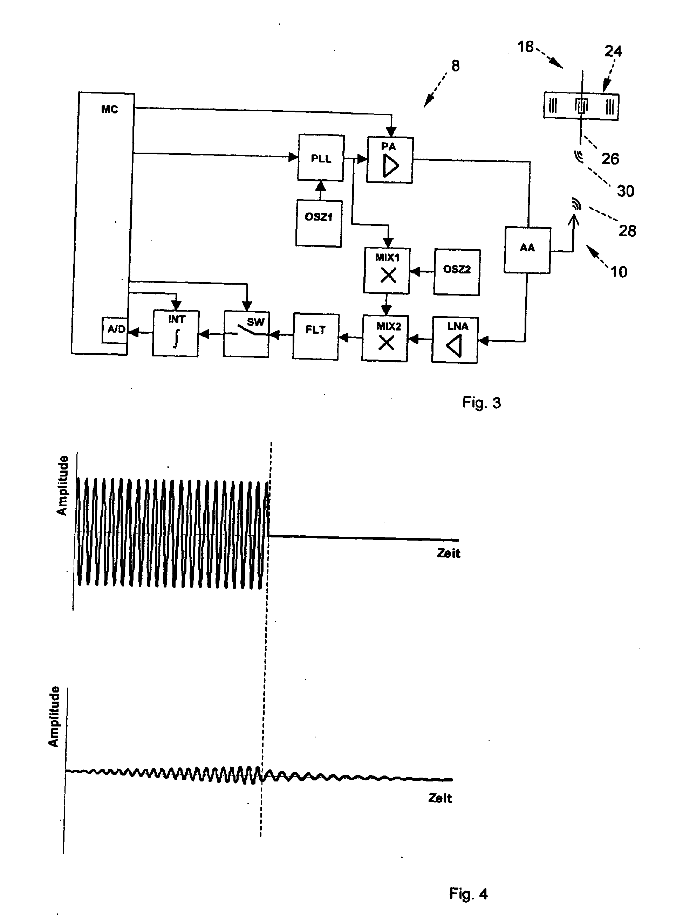

Das Zusammenwirken von Temperaturmesssonde 18 und Verarbeitungseinheit 8 ist anhand von Fig. 3 beispielhaft erläutert. Zur einfacheren Darstellung wird die Funktionsweise lediglich anhand eines einzigen Oberflächenwellenbauelements 24 erläutert.

In Fig. 3 ist ein Blockschaltbild dargestellt, das in der Bildebene links die Verarbeitungseinheit 8 und in der Bildebene rechts die Temperaturmesssonde 18 beinhaltet. Die Verarbeitungseinheit 8 weist eine Recheneinheit MC, die mit einem Phasenregelkreis PLL, einem Oszillator OSZ 1 und einen Leistungsverstärker PA derart verbunden ist, dass ein hochfrequentes Erregersignal erzeugbar ist und während einer ersten Phase als hochfrequente Erregerwelle über ein Netzwerk zur Antennenanpassung AA und die Garraumantenne 10 in Richtung der in der Backmuffel 6 befindlichen Temperaturmesssonde 18 abstrahlbar ist. Die Sendefrequenz des Erregersignals und damit der elektromagnetischen Erregerwelle ist hier aus dem Frequenzband von etwa 433 MHz bis etwa 434 MHz ausgewählt. Zu Anfang beträgt die Sendefrequenz hier 433 MHz. Die Erregerwelle wird, wie in Fig. 1 und 3 durch gekrümmte Linien 28 symbolisiert, drahtlos an die Antenne 26 übertragen. Während der ersten Phase ist die aus einem rücksetzbaren Integrator INT und einem Analog-Digitalwandler A/D bestehende Auswerteschaltung durch einen Schalter SW verriegelt, so dass die während der ersten Phase durch die Garraumantenne 10 empfangenen elektromagnetischen Wellen und die daraus erzeugten elektrischen Signale nicht ausgewertet werden. Siehe hierzu Fig. 3. Grundsätzlich sind jedoch auch andere dem Fachmann bekannte und geeignete Verriegelungen möglich.

In den mit der Antenne 26 elektrisch leitend verbundenen Oberflächenwellenbauelementen 24, von denen in Fig. 3 lediglich eines symbolisch dargestellt ist, werden auf dem Fachmann bekannte Weise elektromagnetische Antwortwellen erzeugt, die in einer unmittelbar an die erste Phase anschließenden zweiten Phase mittels der Antenne 26 und der Garraumantenne 10 an die Verarbeitungseinheit 8 drahtlos rückübertragen wird. Während der zweiten Phase wird kein Erregersignal erzeugt und damit auch keine Erregerwelle ausgestrahlt. Dies ist in den Fig. 1 und 3 durch gekrümmte Linien 30 symbolisiert. Die rückübertragene elektromagnetische Antwortwelle erzeugt in der Verarbeitungseinheit 8 ein Antwortsignal, das nachfolgend auf dem Fachmann bekannte Weise und wie in Fig. 3 durch die Symbole LNA für einen Eingangsverstärker, MIX 1 und MIX 2 für Mischer, OSZ 2 für einen Oszillator und FLT für einen Filter schematisch dargestellt verstärkt, in ein niederfrequentes Signal umgewandelt und gefiltert wird. Während dieser zweiten Phase ist der Schalter SW mittels der Recheneinheit MC geschlossen, so dass das Antwortsignal in die Auswerteeinheit gelangen kann. Mittels des Integrators INT wird das vorher gleichgerichtete Antwortsignal integriert und der Signalpegel des Antwortsignals ermittelt, also die Beträge der Amplitudenwerte des Antwortsignals werden aufsummiert. Anschließend wird der Signalpegel in dem Analog-Digitalwandler A/D der Recheneinheit MC digitalisiert und in einem Speicher der Recheneinheit MC zusammen mit der zugehörigen Sendefrequenz abgespeichert.

Die Zeitdauer der ersten Phase muss derart bemessen sein, dass das Oberflächenwellenbauelement 24 im Resonanzfall ausreichend angeregt werden kann, beispielsweise 100 µs. Da die Antwortwelle und damit das Antwortsignal erfahrungsgemäß in einem Zeitraum von 30 bis 50 µs abgeklungen ist, reicht es aus, wenn die zweite Phase auf 50 µs festgelegt ist. Davon abweichende Zeitdauern für die erste und die zweite Phase sind jedoch auch denkbar.

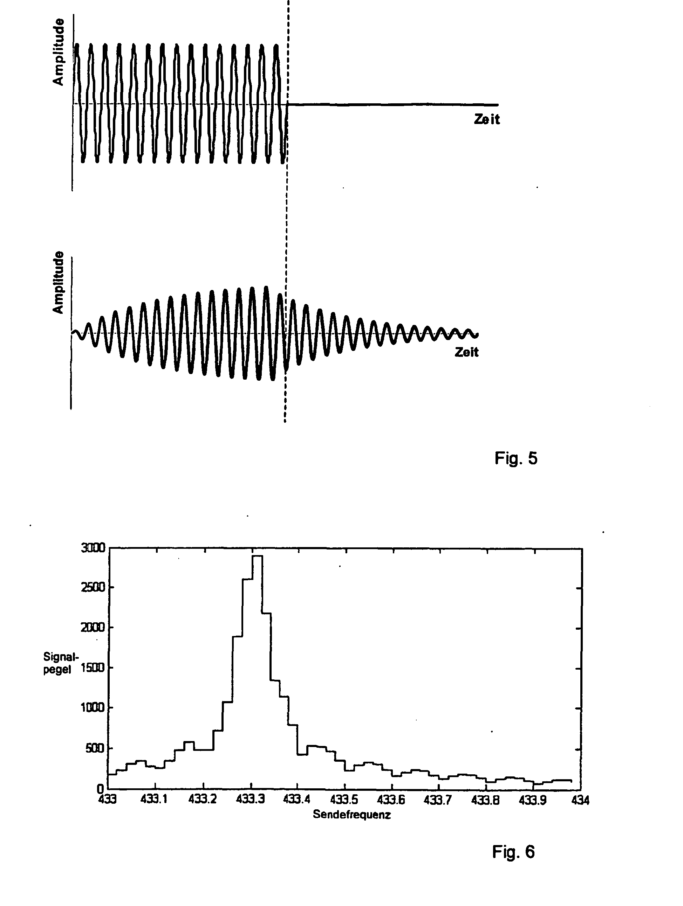

Das Erregersignal und das Antwortsignal werden anhand der Fig. 4 und 5 nachfolgend erläutert.

In Fig. 4 sind das Erregersignal und das Antwortsignal für den Fall dargestellt, dass die für die aktuelle Messung verwendete Sendefrequenz fern der Resonanzfrequenz liegt. In dem oberen Teil von Fig. 4 ist der zeitliche Verlauf des Erregersignals dargestellt, während in dem unteren Teil der zeitliche Verlauf des Antwortsignals dargestellt ist. Der Wechsel von der in der Bildebene links dargestellten ersten Phase auf die in der Bildebene rechts dargestellten zweiten Phase ist durch eine gestrichelte Linie visualisiert. Wie durch die Zunahme der Amplitude des Antwortsignals in Fig. 4 deutlich ersichtlich, wird das Oberflächenwellenbauelement 24 während der ersten Phase zu Schwingungen angeregt. Da die Sendefrequenz fern der Resonanzfrequenz liegt, sind die Amplituden des Antwortsignals jedoch niedrig. Nach Beendigung der ersten Phase und damit der Anregung des Oberflächenwellenbauelements 24 nimmt die Amplitude des Antwortsignals wieder bis auf Null ab.

Fig. 5 zeigt wiederum die zeitlichen Verläufe des Erregersignals und des Antwortsignals, jedoch für eine Sendefrequenz nahe der Resonanzfrequenz. Im Unterschied zu dem Verlauf aus Fig. 4 sind hier die Amplituden des Antwortsignals deutlich größer.

Der vorgenannte Ablauf wird für eine Vielzahl von voneinander verschiedenen Sendefrequenzen wiederholt, wobei der Integrator INT jeweils vor der Durchführung der nächsten Messung zurückgesetzt werden muss. Bei dem vorliegenden Ausführungsbeispiel wird die Sendefrequenz für jede weitere Messung um 5 kHz erhöht. Also beispielsweise von der ersten Sendefrequenz 433 MHz auf die zweite Sendefrequenz 433,005 MHz. Um den Speicherplatzbedarf möglichst gering zu halten, wird hierbei lediglich der bis zur aktuellen Messung größte Signalpegel sowie die zugeordnete Sendefrequenz abgespeichert. Der abgespeicherte Signalpegel wird in der Recheneinheit MC mit dem aktuellen Signalpegel verglichen. Ist der Signalpegel beispielsweise bei der zweiten Messung größer als bei der ersten Messung, so wird der Signalpegel der ersten Messung und die dazugehörige Sendefrequenz, nämlich 433 MHz, aus dem Speicher gelöscht. Der Speicher wird dann mit dem Signalpegel der zweiten Messung mit der dazugehörigen Sendefrequenz, nämlich 433,005 MHz, überschrieben, der wiederum mit dem Signalpegel der dritten Messung verglichen wird und so weiter. Ist das Frequenzband auf diese Weise vollständig durchlaufen worden, ist der größte Signalpegel und die dazugehörige Sendefrequenz ermittelt. Über eine in der Recheneinheit MC hinterlegte Tabelle oder Funktion kann dann auf dem Fachmann bekannte Weise mittels der Sendefrequenz die aktuelle Temperatur an dem Oberflächenwellenbauelement 24 ermittelt werden.

In Fig. 6 ist der Signalpegel in Abhängigkeit der Sendefrequenz dargestellt. Der Signalpegel bei der Resonanzfrequenz hebt sich deutlich von den anderen Signalpegeln ab, so dass eine Auswertung und damit die Ermittlung der aktuellen Temperatur an dem Oberflächenwellenbauelement 24 auf einfache Weise ermöglicht ist.

Um beispielsweise die negativen Auswirkungen einer Drift über die Lebensdauer des Oberflächenwellenbauelements 24 auf die Genauigkeit der Temperaturmessung zu reduzieren oder zu verhindern, wird bei dem vorliegenden Ausführungsbeispiel in regelmäßigen und vorher festgelegten Zeitabständen automatisch eine Nachkalibrierung des Oberflächenwellenbauelements 24 durchgeführt. Diese kann beispielsweise jeweils vor dem Aufheizen der Backmuffel 6 von Umgebungstemperatur erfolgen. Hierzu wird die weitere Temperaturmesssonde 12 verwendet. Sofern die durch die Temperaturmesssonden 18 und 12 ermittelten Temperaturen voneinander abweichen, werden alle für das Oberflächenwellenbauelement 24 abgespeicherten Zuordnungen von Temperatur und Resonanzfrequenz jeweils um diesen Differenzbetrag korrigiert. Um die Genauigkeit der Nachkalibrierung zu verbessern wäre es auch denkbar, die Nachkalibrierung in Abhängigkeit von mehreren Temperaturmessungen, insbesondere bei voneinander verschiedenen Temperaturen, durchzuführen.

Die obigen Ausführungen bezüglich eines einzigen Oberflächenwellenbauelements 24 gelten analog für die übrigen Oberflächenwellenbauelemente 24 der Temperaturmesssonde 18. Um die Antwortsignale dem jeweiligen Oberflächenwellenbauelement 24 eindeutig zuordnen zu können, ist hier das Frequenzband entsprechend der Anzahl der Oberflächenwellenbauelemente 24 weiter in schmalere Frequenzbänder unterteilt. Alternativ hierzu wäre es auch denkbar, allen Oberflächenwellenbauelementen 24 ein einziges gemeinsames Frequenzband zuzuordnen. In diesem Fall ist aber ein größerer Speicherplatz erforderlich, da mehrere Signalpegel gleichzeitig verarbeitet werden müssen. Im vorliegenden Fall einer als Garspieß ausgebildeten Temperaturmesssonde 18 könnte aus den Signalpegeln eine mittlere Garguttemperatur ermittelt werden. Auch wäre die Ermittlung der gleichzeitig vorliegenden niedrigsten und höchsten Temperatur im Gargut 16 denkbar.

Bei dem vorliegenden Ausführungsbeispiel werden die auf diese Weise ermittelten Temperaturen zur Regelung des Garprozesses verwendet. Je nachdem wie die Temperaturverteilung in dem Gargut 16 ist, wird die Beheizungsart und die Beheizungsintensität sowie die Durchspülung der Backmuffel 6 mit Frischluft geregelt. Darüber hinaus werden die aktuellen Temperaturen auf der Anzeigeeinrichtung 4 angezeigt. Jedoch sind auch andere Regelungen des Garprozesses hierdurch ermöglicht.

Abweichend von dem Ausführungsbeispiel sind auch andere Anordnungen und Ausbildungen der Temperaturmesssonde 18 denkbar. Die Temperaturmesssonde 18 könnte lagefest an oder in der Backmuffel 6, beispielsweise an den Aufnahmen für die Gargutträger 14, angeordnet sein. Ferner sind auch andere dem Fachmann bekannte und geeignete Formen als die eines Garspießes und Anordnungen für die Temperaturmesssonde 18 denkbar.

Um die Genauigkeit der Temperaturmessung zu erhöhen, wäre es möglich, den Abstand zwischen den einzelnen Sendefrequenzen geringer als 5 kHz zu wählen.

Die oben genannte Aufbereitung des Antwortsignals vor dessen Weiterleitung an die Auswerteschaltung ist nicht zwingend erforderlich, sondern erleichtert lediglich die Auswertung und reduziert den schaltungstechnischen Aufwand. Grundsätzlich ist es jedoch auch denkbar, das hochfrequente, nicht gleichgerichtete Antwortsignal auszuwerten. Ferner ist die erfindungsgemäße Lehre nicht auf die Verwendung eines Integrators INT zur Auswertung des Antwortsignals beschränkt. Andere dem Fachmann bekannte und geeignete Schaltungen und Verfahren zur Erzeugung eines Signalpegels sind auch denkbar.

## Patentansprüche

1. Verfahren zur Temperaturmessung bei einem Haushaltsgerät, das folgende Verfahrensschritte aufweist:
- Erzeugung einer hochfrequenten elektromagnetischen Erregerwelle einer vorher festgelegten Sendefrequenz aus einem Frequenzband, in dem die temperaturabhängigen Resonanzfrequenzen eines in einer Temperaturmesssonde integrierten Oberflächenwellenbauelements enthalten sind, die den bei dem Betrieb des Haushaltsgeräts an der Temperaturmesssonde zu erwartendenden Temperaturen entsprechen, wobei die Erzeugung der Erregerwelle mittels einer elektrischen Verarbeitungseinheit des Haushaltsgeräts erfolgt,
- drahtlose Übertragung der Erregerwelle auf das Oberflächenwellenbauelement der Temperaturmesssonde während einer ersten Phase,
- drahtlose Rückübertragung einer durch die Erregerwelle in dem Oberflächenwellenbauelement erzeugten elektromagnetischen Antwortwelle an die Verarbeitungseinheit während einer unmittelbar an die erste Phase anschließenden zweiten Phase,
- Messung des Signalpegels des aus der Antwortwelle erzeugten Antwortsignals in einer Auswerteschaltung der Verarbeitungseinheit während der zweiten Phase und Abspeicherung des Signalpegels und der zugehörigen Sendefrequenz in einem Speicher der Verarbeitungseinheit,
- Wiederholung der vorgenannten Verfahrensschritte für eine Vielzahl von voneinander verschiedenen Frequenzen aus dem Frequenzband als jeweils eine Messung,
- Vergleich zumindest des Signalpegels aus der aktuellen Messung mit dem Signalpegel der letzten Messung und
- Ermittlung der aktuellen Temperatur des Oberflächenwellenbauelements mittels der Auswahl der Sendefrequenz mit dem größten Signalpegel.

2. Verfahren nach Anspruch 1,
**dadurch gekennzeichnet,**
**dass** die aktuelle Temperatur zur Regelung des Garprozesses verwendet und/oder auf einer Anzeigeeinrichtung (4) des Haushaltsgeräts angezeigt wird.

3. Verfahren nach einem der Ansprüche 1 oder 2,
**dadurch gekennzeichnet,**
**dass** die Sendefrequenz aus dem Frequenzband von etwa 433 MHz bis etwa 434 MHz gewählt wird und sich die in dem Frequenzband direkt benachbarten Sendefrequenzen um etwa 5 kHz oder weniger voneinander unterscheiden.

4. Verfahren nach einem der Ansprüche 1 bis 3,
**dadurch gekennzeichnet,**
**dass** das hochfrequente Antwortsignal vor der Verarbeitung in der Auswerteschaltung in der Verarbeitungseinheit (8) in ein niederfrequentes Antwortsignal umgewandelt wird.

5. Verfahren nach mindestens einem der Ansprüche 1 bis 4,
**dadurch gekennzeichnet,**
**dass** das Antwortsignal vor der Verarbeitung in der Auswerteschaltung in der Verarbeitungseinheit (8) gleichgerichtet wird.

6. Verfahren nach mindestens einem der Ansprüche 1 bis 5,
**dadurch gekennzeichnet,**
**dass** die gleiche Sendefrequenz mehrfach unmittelbar nacheinander verwendet wird und aus den einzelnen Signalpegeln zu einer Sendefrequenz ein mittlerer Signalpegel gebildet, abgespeichert und für den Vergleich verwendet wird.

7. Verfahren nach mindestens einem der Ansprüche 1 bis 6,
**dadurch gekennzeichnet,**
**dass** die von mindestens zwei Oberflächenwellenbauelementen (24) im gleichen Frequenzband erzeugten Signalpegel in der Auswerteschaltung ausgewertet werden.

8. Verfahren nach mindestens einem der Ansprüche 1 bis 6,
**dadurch gekennzeichnet,**
**dass** jeweils nur der bis zur aktuellen Messung größte Signalpegel sowie die zugeordnete Sendefrequenz abgespeichert wird.

9. Verfahren nach mindestens einem der Ansprüche 1 bis 8,
**dadurch gekennzeichnet,**
**dass** zeitlich vor den übrigen Verfahrensschritten in einem ersten Verfahrensschritt mittels einer weiteren mit der Verarbeitungseinheit (8) in Signalübertragungsverbindung stehenden Temperaturmesssonde (12) mit einem Temperatursensor, der eine im Wesentlichen über dessen Lebensdauer konstante Korrelation zwischen Eingangs- und Ausgangsgröße aufweist, in der Auswerteschaltung eine Nachkalibrierung der dem Oberflächenwellenbauelement (24) oder den einzelnen Oberflächenwellenbauelementen (24) zugeordneten temperaturabhängigen Resonanzfrequenzen erfolgt.

10. Verfahren nach mindestens einem der Ansprüche 1 bis 6 sowie 8 und 9,
**dadurch gekennzeichnet,**
**dass** für die Temperaturmessung mit mindestens zwei Oberflächenwellenbauelementen (24) zumindest zwei voneinander verschiedene Frequenzbänder verwendet werden, wobei den mindestens zwei Oberflächenbauelementen (24) jeweils ein Frequenzband zugeordnet ist.

## Claims

1. Method for measuring temperature in a domestic appliance, comprising the following method steps:
- generating a high-frequency electromagnetic excitation wave of a predefined transmitting frequency from a frequency band which includes the temperature-dependent resonant frequencies of a surface wave component integrated into a temperature measuring probe, which frequencies correspond to the temperatures to be expected at the temperature measuring probe during operation of the domestic appliance, the generation of the excitation wave being carried out by means of an electrical processing unit of the domestic appliance,
- wirelessly transmitting the excitation wave to the surface wave component of the temperature measuring probe during a first phase,
- wirelessly transmitting an electromagnetic response wave, generated by the excitation wave in the surface wave component, back to the processing unit during a second phase directly following the first phase,
- measuring, in an evaluation circuit of the processing unit, the signal level of the response signal generated from the response wave during the second phase and storing the signal level and the associated transmitting frequency in a storage means of the processing unit,
- repeating the above-mentioned method steps for a plurality of different frequencies from the frequency band, each being one measurement,
- comparing at least the signal level of the current measurement to the signal level of the last measurement, and
- determining the current temperature of the surface wave component by selecting the transmitting frequency with the highest signal level.

2. Method according to claim 1, **characterised in that** the current temperature is used to control the cooking process and/or is displayed on a display device (4) of the domestic appliance.

3. Method according to either claim 1 or claim 2, **characterised in that** the transmitting frequency is selected from the frequency band of from approximately 433 MHz to approximately 434 MHz, and the transmitting frequencies which are directly adjacent to each other in the frequency band differ from one another by approximately 5 kHz or less.

4. Method according to any of claims 1 to 3, **characterised in that** the high-frequency response signal is converted into a low-frequency response signal in the processing unit (8) before processing in the evaluation circuit.

5. Method according to at least one of claims 1 to 4, **characterised in that** the response signal is rectified in the processing unit (8) before processing in the evaluation circuit.

6. Method according to at least one of claims 1 to 5, **characterised in that** the same transmitting frequency is used a number of times in direct succession and, from the individual signal levels for a signal frequency, an average signal level is formed, stored and used for the comparison.

7. Method according to at least one of claims 1 to 6, **characterised in that** the signal levels generated by at least two surface wave components (24) in the same frequency band are evaluated in the evaluation circuit.

8. Method according to at least one of claims 1 to 6, **characterised in that** only the highest signal level up to the current measurement and the associated transmitting frequency respectively are stored.

9. Method according to at least one of claims 1 to 8, **characterised in that**, at a point in time prior to the remaining method steps, the temperature-dependent resonant frequencies associated with the surface wave component (24) or the individual surface wave components (24) are recalibrated in the evaluation circuit in a first method step by means of a further temperature measuring probe (12) which connected in a signal transmitting manner to the processing unit (8) and has a temperature sensor which has a substantially constant correlation between input and output values over the service life thereof.

10. Method according to at least one of claims 1 to 6 and claims 8 and 9, **characterised in that** at least two different frequency bands are used for the temperature measurement using at least two surface wave components (24), a frequency band being associated with each of the at least two surface components (24).

## Revendications

1. Procédé de mesure de la température dans un appareil électroménager, qui présente les étapes de procédé suivantes :
- production d'une onde d'excitation électromagnétique haute fréquence d'une fréquence d'émission définie antérieurement à partir d'une bande de fréquences dans laquelle les fréquences de résonance, qui dépendent de la température, d'un composant d'ondes de surface intégré sont contenues et correspondent aux températures à attendre sur la sonde de mesure de température lors du fonctionnement de l'appareil électroménager, la production de l'onde d'excitation s'effectuant au moyen d'une unité de traitement électrique de l'appareil électroménager,
- transmission sans fil de l'onde d'excitation au composant d'ondes de surface de la sonde de mesure de température pendant une première phase,
- retransmission sans fil à l'unité de traitement d'une onde de réponse électromagnétique produite par l'onde d'excitation dans le composant d'ondes de surface, pendant une deuxième phase suivant immédiatement la première phase,
- mesure du niveau de signal du signal de réponse produit à partir de l'onde de réponse dans un circuit d'analyse de l'unité de traitement pendant la deuxième phase, et enregistrement du niveau de signal et de la fréquence d'émission correspondante dans une mémoire de l'unité de traitement,
- répétition des étapes de procédé précitées pour une multiplicité de fréquences différentes les unes des autres à partir de la bande de fréquences, sous forme respectivement d'une mesure,
- comparaison au moins du niveau de signal issu de la mesure actuelle avec le niveau de signal de la dernière mesure et
- détermination de la température actuelle du composant d'ondes de surface au moyen de la sélection de la fréquence d'émission avec le niveau de signal le plus élevé.

2. Procédé selon la revendication 1,
**caractérisé en ce**
**que** la température actuelle est utilisée pour la régulation du processus de cuisson et/ou est affichée sur un équipement d'affichage (4) de l'appareil électroménager.

3. Procédé selon une des revendications 1 ou 2,
**caractérisé en ce**
**que** la fréquence d'émission est choisie dans la bande de fréquences d'environ 433 MHz à environ 434 MHz, et en ce que les fréquences d'émission directement voisines dans la bande de fréquences diffèrent les unes des autres d'environ 5 kHz ou moins.

4. Procédé selon une des revendications 1 à 3,
**caractérisé en ce**
**que**, avant le traitement dans le circuit d'analyse, le signal de réponse haute fréquence est converti en un signal de réponse basse fréquence dans l'unité de traitement (8).

5. Procédé selon au moins une des revendications 1 à 4,
**caractérisé en ce**
**que**, avant le traitement dans le circuit d'analyse, le signal de réponse est redressé dans l'unité de traitement (8).

6. Procédé selon au moins une des revendications 1 à 5,
**caractérisé en ce**
**que** la même fréquence d'émission est utilisée plusieurs fois directement successivement, et en ce que, à partir des niveaux de signal individuels d'une fréquence d'émission, un niveau de signal moyen est formé, enregistré et utilisé pour la comparaison.

7. Procédé selon au moins une des revendications 1 à 6,
**caractérisé en ce**
**que** les niveaux de signal produits par au moins deux composants d'ondes de surface (24) dans la même bande de fréquences sont analysés dans le circuit d'analyse.

8. Procédé selon au moins une des revendications 1 à 6,
**caractérisé en ce**
**que**, respectivement seul le niveau de signal le plus grand jusqu'à la mesure actuelle ainsi que la fréquence d'émission affectée sont enregistrés.

9. Procédé selon au moins une des revendications 1 à 8,
**caractérisé en ce**
**que**, chronologiquement avant les étapes de procédé restantes, dans une première étape de procédé, au moyen d'une autre sonde de mesure de température (12) en liaison de transmission de signaux avec l'unité de traitement (8), avec un capteur de température qui présente une corrélation, essentiellement constante pendant sa durée de vie, entre la grandeur d'entrée et la grandeur de sortie, il est effectué, dans le circuit d'analyse, un réétalonnage des fréquences de résonance dépendant de la température et affectées au composant d'ondes de surface (24) ou aux différentes composants d'ondes de surface (24).

10. Procédé selon au moins une des revendications 1 à 6 ainsi que 8 et 9,
**caractérisé en ce**
**que**, pour la mesure de température avec au moins deux composants d'ondes de surface (24), au moins deux bandes de fréquences différentes l'une de l'autre sont utilisées, une bande de fréquences étant affectée à chacun des au moins deux composants d'ondes de surface (24).
